Europäisches Patentamt

European Patent Office

Office européen des brevets

(19)

(11) Publication number: **0 220 616 B1**

(12) **EUROPEAN PATENT SPECIFICATION**

(45) Date of publication of patent specification: **03.07.91**      (51) Int. Cl.⁵: **B01J 29/06**, C10G 47/16, C10G 47/20

(21) Application number: **86114316.2**

(22) Date of filing: **16.10.86**

(54) Hydrocarbon conversion catalyst and process for selectively making middle distillates.

(30) Priority: **31.10.85 US 793567**

(43) Date of publication of application:
**06.05.87 Bulletin 87/19**

(45) Publication of the grant of the patent:
**03.07.91 Bulletin 91/27**

(84) Designated Contracting States:
**BE DE FR GB LU NL**

(56) References cited:
**EP-A- 0 134 333**
**US-A- 3 283 331**
**US-A- 3 337 474**
**US-A- 4 185 040**

(73) Proprietor: **UNION OIL COMPANY OF CALIFORNIA**
**1201 West 5th Street**
**Los Angeles California 90017(US)**

(72) Inventor: **Ward, John W.**
**19002 Gordon Lane**
**Yorba Linda California 92686(US)**

(74) Representative: **Jack, Bruce James et al**
**FORRESTER & BOEHMERT Widenmayer-strasse 4/I**
**W-8000 Munchen 22(DE)**

## Description

This invention relates to a hydrocracking process and a catalyst for use therein. The invention is particularly concerned with a catalyst containing an ultra-hydrophobic zeolite which, when used as a hydrocracking catalyst, selectively yields middle distillates.

Petroleum refiners often produce desirable products such as turbine fuel, diesel fuel, and other products known as middle distillates, as well as lower boiling liquids, such as naphtha and gasoline, by hydrocracking a hydrocarbon feedstock derived from crude oil. Feedstocks most often subjected to hydrocracking are gas oils and heavy gas oils recovered from crude oil by distillation. A typical gas oil comprises a substantial proportion of hydrocarbon components boiling above about 370°C (700°F), usually at least about 50 percent by weight boiling above about 370°C. A typical heavy gas oil normally has a boiling point range between about 315°C (600°F) and 565°C (1050°F).

Hydrocracking is generally accomplished by contacting, in an appropriate reaction vessel, the gas oil or other feedstock to be treated with a suitable hydrocracking catalyst under conditions of elevated temperature and pressure in the presence of hydrogen so as to yield a product containing a distribution of hydrocarbon products desired by the refiner. Although the operating conditions within a hydrocracking reactor have some influence on the yield of the products, the hydrocracking catalyst is the prime factor in determining such yields. At the present time middle distillates are not in high demand in the United States; however, marketing surveys indicate that there will be an increased demand for middle distillates as the year 2000 approaches. For this reason refiners have recently been focusing on midbarrel hydrocracking catalysts which selectively produce middle distillate fractions, such as turbine fuel and diesel fuel, that boil in the 150°C to 370°C (300°F to 700°F) range.

The three main catalytic properties by which the performance of a midbarrel hydrocracking catalyst is evaluated are activity, selectivity, and stability. Activity may be determined by comparing the temperature at which various catalysts must be utilized under otherwise constant hydrocracking conditions with the same feedstock so as to produce a given percentage, normally about 60 percent, of products boiling below 370°C (700°F). The lower the activity temperature for a given catalyst, the more active such a catalyst is in relation to a catalyst of higher activity temperature. Selectivity of hydrocracking catalysts may be determined during the foregoing described activity test and is measured as the percentage fraction of the product boiling at under 370°C (700°F) that boils in the midbarrel product range of 150°C to 370°C (300°F to 700°F). Stability is a measure of how well a catalyst maintains its activity over an extended time period when treating a given hydrocarbon feedstock under the conditions of the activity test. Stability is generally measured in terms of the change in temperature required per day to maintain a 60 percent or other given conversion.

US-A-3 929 672 discloses hydrothermally stable and ammonia stable Y zeolites and compositions containing such zeolites, , which compositions may be used as hydrocracking catalysts. The stabilized Y zeolites are prepared from a sodium Y zeolite by partially exchanging sodium cations with ammonium cations, steam-calcining the ammonium-exchanged zeolite under controlled conditions of time, temperature and steam partial pressure correlated to reduce the unit cell size of the zeolite to between about 2.440 and 2.464nm (24.40 and 24.64 Angstroms), and then further ion-exchanging the steam-calcined zeolite with ammonium cations to replace at least 25 percent, preferably at least 70 percent, of the remaining sodium ions with ammonium ions. The resulting zeolite is used as a component of a hydrocarbon conversion catalyst by intimately mixing the zeolite with a hydrous refractory oxide, consolidating the mixture into a granular shape by tableting, prilling, or extruding and then calcining the resultant particles at a temperature between 315°C. and 815°C. (600°F. and 1500°F.). The calcination of the extruded or other granular-shaped particles is carried out in a relatively anhydrous environment and is controlled to prevent substantial shrinkage in unit cell size of the zeolite with it being essential that the final unit cell size be above 2440nm (24.40 Angstroms).

As pointed out in U.S. Patent No. 4,401,556, hydrocracking catalysts containing crystalline aluminosilicate zeolites generally have high activity but relatively poor selectivity for middle distillate products. Because of this, midbarrel hydrocracking catalysts normally employ an amorphous inorganic oxide base containing no zeolitic component. Such catalysts, although selective for middle distillates, are not nearly as active as a catalyst containing a zeolitic component. U.S. Patent No. 4,401,556 discloses a midbarrel hydrocracking catalyst containing an ultrahydrophobic crystalline aluminosilicate zeolite which catalyst possesses both high activity and high selectivity for producing middle distillates. According to the patent, the selectivity of the ultrahydrophobic zeolite component is abnormally high while the activity and stability of the zeolite are not impaired when compared to other known zeolite supports. The ultrahydrophobic zeolite is prepared from a Y type zeolite starting material having a silica-to-alumina mole ratio of from about 4.5 to about 6.0 and a sorptive capacity for water vapor of at least 6 weight percent at 25° C. and a $p/p°$ value of 0.10 by calcining the zeolite powder in an environment comprising from 0.2 to about 10 atmospheres absolute of steam at a temperature ranging from 725° C. to 870° C. for a period of time sufficient to reduce the zeolite's sorptive capacity for water vapor to less than 5 weight percent at 25° C. and a $p/p°$ value of 0.10.

Midbarrel hydrocracking catalysts have been prepared using one of the ultrahydrophobic zeolites disclosed in U.S. Patent No. 4,401,556 by subjecting the zeolite to an ammonium exchange and then mixing the ammonium-exchanged ultrahydrophobic zeolite with an inorganic refractory oxide component and an alumina binder material. The resultant mixture is then extruded through a die to form extrudates which are dried at 120° C. and subsequently calcined in air at 900° C. The calcined extrudates are then impregnated with a solution of nickel and tungsten components, dried and again calcined in air. It has been surprisingly found that different batches of hydrocracking catalysts prepared in accordance with the above-disclosed procedure have varying selectivities for middle distillates, some of which selectivities are relatively low. The commercial use of a midbarrel hydrocracking catalyst with lower than desired selectivity for middle distillates will result in a loss of the desired middle distillate product.

Accordingly, it is one of the objects of the present invention to provide a midbarrel hydrocracking catalyst containing an ultrahydrophobic zeolite, and a method for preparing such a catalyst, which is useful in hydrocracking and has high selectivity for middle distillates, which selectivity does not substantially vary from one batch of catalyst to another. This and other objects of the invention will become more apparent in view of the following description of the invention.

## SUMMARY OF THE INVENTION

It has been found that catalysts containing ultrahydrophobic zeolites prepared by calcining certain zeolite powders in steam have varying selectivities for middle distillate products. It is believed that this variability in selectivity is caused by the difficulty of commercially steam calcining the small particles which comprise the zeolite powder. It has been further found that the observed variance in selectivities can be substantially avoided by postponing the steam calcination step until after the zeolite powder has been incorporated into the catalyst extrudates, and by calcining under conditions to reduce the unit cell size to within a specific range. Accordingly, the invention is directed to a catalyst composition prepared by a process in which a mixture of a porous, inorganic refractory oxide component and a crystalline aluminosilicate zeolite selected from Y zeolites, modified Y zeolites, X zeolites and modified X zeolites having cracking activity is extruded to form extrudate particles which are subsequently calcined in the presence of steam at a water vapor partial pressure greater than about 14 kPa (2.0 p.s.i.a.), preferably greater than about 34.5 kPa (5 p.s.i.a.), under conditions such that the unit cell size of the crystalline aluminosilicate zeolite is reduced to a value between 2.420 and 2.435nm (24.20 and 24.35 Angstroms). In certain embodiments of the invention, a hydrocracking catalyst composition of relatively uniform selectivity for middle distillates is prepared as described above with the additional step of incorporating at least one hydrogenation metal component, preferably a component containing a metal selected from Group VIA or Group VIII of the Periodic Table of Elements, into the steam calcined extrudates. As used herein "Periodic Table of Elements" refers to the version officially approved by the International Union of Pure and Applied Chemistry (IUPAC) in its 1970 rules. An example of such a table may be found in the inside back cover of the book entitled "Advanced Inorganic Chemistry," fourth edition, which is authored by F.A. Cotton and G. Wilkinson and was published in 1980 by Wiley Interscience of New York.

A preferred porous, refractory oxide component for use in the catalyst of the invention is a dispersion of silica-alumina in an alumina matrix. A preferred crystalline aluminosilicate zeolite for use in the catalyst is prepared by a process comprising the steps of (1) ammonium exchanging a sodium Y zeolite to a sodium content between 0.6 and 5 weight percent, calculated as $Na_2O$, (2) calcining the ammonium-exchanged zeolite at a temperature between 315 C. (600° F.) and 900° C. (1650° F.) in the presence of steam at a water vapor partial pressure of at least about 1.4kPa (0.2 p.s.i.a.) to reduce the unit cell size of said ammonium-exchanged zeolite to a value in the range between 2.440 and 2.464nm (24.40 and 24.64 Angstroms), and (3) ammonium exchanging the steam calcined zeolite to reduce the sodium content of the zeolite below about 0.6 weight percent, calculated as $Na_2O$.

The catalyst extrudates are normally calcined in the presence of a sufficient amount of added steam and under conditions such that the unit cell size of the zeolite is reduced at least about 0.01nm (0.10 Angstroms) to a value between 2.420 and 2.445nm (24.20 and 24.45 Angstroms), preferably between 2.420 and 2.435nm (24.20 and 24.35 Angstroms). The residence time, temperature, and water vapor partial pressure utilized during calcination of the extrudates will typically be the same as the residence time, temperature and water vapor partial pressure required to reduce the sorptive capacity of the zeolite for water vapor to less than about 5 weight percent, preferably less than about 4 weight percent, of the zeolite at 25° C. and a p/p° value of 0.10 if the zeolite was calcined in steam alone without first being combined with other components to form extrudates. As used herein "p/p°" represents the water vapor partial pressure to which the zeolite is exposed divided by the water vapor partial pressure at 25° C.

Catalysts of the invention have been found to have consistently high selectivities for producing middle distillates from heavy gas oils. Since variance in catalyst selectivity for middle distillates is avoided by postponing the steaming step until after the zeolite powder has been combined with the refractory oxide component and other constituents of the catalyst in the form of extrudates, the steaming step may be incorporated into the air calcination of the extrudates, a step normally employed in preparing hydrocracking catalysts, thereby reducing the number of steps necessary to manufacture the catalyst of the invention and also decreasing the cost of manufacturing.

## DETAILED DESCRIPTION OF THE INVENTION

In accordance with this invention, a hydrocarbon conversion catalyst is prepared by extruding a mixture of a porous, inorganic refractory oxide component and a crystalline aluminosilicate zeolite having cracking activity into extrudates which are then broken into desired lengths and calcined in the presence of added steam at a water vapor partial pressure greater than about 14 kPa (2.0 p.s.i.a). As used herein "extruding" includes all forms of pelleting including tableting, extruding, prilling and the like. A midbarrel hydrocracking catalyst may be prepared by adding one or more hydrogenation components to the mixture of inorganic refractory oxide and zeolite that is extruded or by impregnating the steam calcined extrudates with a solution containing one or more hydrogenation components. The steam calcination step is carried out in the presence of sufficient added and flowing steam under conditions such that the unit cell size of the zeolite is normally reduced at least about 0.01nm (0.10 Angstroms) to a value between 2.420 and 2.445nm (24.20 and 24.45 Angstroms). The water vapor partial pressure, residence time and temperature utilized during the steam calcination will be such that, if the zeolite particles were calcined alone in steam under these same conditions prior to being composited with the inorganic refractory oxide and formed into extrudates, the sorptive capacity of the zeolite for water vapor would be less than 5 weight percent of said zeolite at 25° C. and a p/p° value of 0.10. Thus, the zeolite in the steamed catalyst extrudates will be ultrahydrophobic. Catalysts containing zeolites that are converted to ultrahydrophobic zeolites by steaming after the zeolite has been composited with other components and formed into extrudates have been found to have selectivities for producing middle distillates which do not substantially vary from one catalyst batch to another.

The invention is based at least in part upon the discovery that, if the zeolite component of a catalyst is steamed prior to compositing the zeolite powder with the refractory oxide component and forming the extrudates, the selectivity of the resultant catalyst for middle distillate products is quite variable, with some batches having high selectivities and other batches having low selectivities. It is believed that this variance in selectivity is the direct result of the small particles that comprise the zeolite powder. Such particles typically range in size between 0.10 and 10 $\mu$m in diameter. During commercial production it is normal practice to calcine these small zeolite particles in the presence of added steam in an inclined rotary kiln furnace. The small particles of zeolite are introduced at the entrance of the furnace from where they pass at an incline downwardly usually in countercurrent or cocurrent contact with steam which is typically introduced into the exit or entrance of the furnace. Alternatively, the steam may be introduced axially into the furnace through a perforated pipe located in the center of the furnace and running the length of the furnace. Because of the small size of the zeolite particles, it is very difficult to obtain an even distribution of the particles as they flow through the furnace in contact with the steam. Some of the particles may travel faster through the furnace than others, while a large number of particles may travel preferentially down the walls of the furnace or through the center of the furnace. As a result only a portion of the zeolite particles are subjected to steam under the proper conditions required to convert the particles to the desired ultrahydrophobic zeolite. In the extreme, some of the particles may contact so much steam that substantially all of the structural aluminum in the particles is removed, thereby converting the zeolite particles into inactive quartz. Other particles may contact too little steam thus resulting in particles containing too much structural aluminum. The particles of zeolite that have been nonuniformly calcined with steam may not have the desired unit cell size, water sorptive capacity or other properties required of the ultrahydrophobic zeolite that, when combined with a refractory oxide component and hydrogenation metal components, results in a hydrocracking catalyst having a high selectivity for middle distillates.

It has been found that the above-discussed problem can be avoided by eliminating the direct steaming of the zeolite powder and instead compositing the zeolite powder with the refractory oxide component in the form of extrudates which can then be subjected to steam calcination -- instead of air calcination -- under conditions, including the proper water vapor partial pressure, residence time, and temperature, to convert the original zeolite in the extrudates into the desired ultrahydrophobic zeolite. The steam calcination step may be carried in an inclined rotary kiln furnace as before but since the catalyst particles are now in the form of extrudates, which will normally have a diameter of at least about 0.8mm (1/32 of an inch) and are much larger than the original zeolite particles, they will pass uniformly through the furnace in such a fashion that the individual particles contact approximately the same amount of steam at about the same temperature for approximately the same time. The end result is the production of a catalyst which will not have substantially different selectivities from one batch to another.

Suitable zeolitic starting materials for use in preparing the catalyst of the invention include crystalline aluminosilicate zeolites which have catalytic activity for cracking hydrocarbons and which are selected from Y zeolites, modified Y zeolites, X zeolites and modified X zeolites. The most preferred zeolites for use in preparing the catalyst are crystalline aluminosilicate Y zeolites. U.S. Patent No. 3,130,007, describes Y-type zeolites having an overall silica-to-alumina mole ratio between 3.0 and 6.0, with a typical Y zeolite having an overall silica-to-alumina mole ratio of about 5.0. It is also known that Y-type zeolites can be produced, normally by dealumination, having an overall silica-to-alumina mole ratio above 6.0. Thus, for purposes of this invention, a Y zeolite is one having the characteristic crystal structure of a Y zeolite, as indicated by the essential X-ray powder diffraction pattern of Y zeolite, and an overall silica-to-alumina mole ratio above 3.0, and includes Y-type zeolites having an overall silica-to-alumina mole ratio above about 6.0.

Both nondealuminated and dealuminated Y zeolites may be used as a starting material for preparation of the catalyst. The term "dealuminated Y zeolite" as used herein refers to a Y zeolite which has been treated to remove aluminum from the framework structure of the zeolite. A dealuminated Y zeolite may have an overall silica-to-alumina mole ratio above or below 6.0 depending on whether the aluminum removed from the framework structure of the zeolite is also removed from the bulk zeolite. It will be understood that in converting a Y zeolite starting material to a dealuminated Y zeolite, the resulting dealuminated zeolite may not have exactly the same X-ray powder diffraction pattern for Y zeolites as is disclosed in U.S. Patent No. 3,130,007. The d-spacings may be shifted somewhat due to a shrinkage in the unit cell size which is due to a decrease in framework aluminum content. The essential crystal structure of Y zeolite will, however, be retained so that the essential X-ray powder diffraction pattern of the dealuminated zeolite will be consistent with that of either Y zeolite itself or a Y zeolite of reduced unit cell size.

The stability and/or acidity of the starting zeolite, whether dealuminated or nondealuminated, may be increased by exchanging the zeolite with ammonium ions, polyvalent metal cations, such as rare earth-containing cations, magnesium cations or calcium cations, or a combination of ammonium ions and polyvalent metal cations, thereby lowering the sodium content until it is less than about 0.8 weight percent, preferably less than about 0.5 weight percent and most preferably less than about 0.3 weight percent, calculated as $Na_2O$. Methods of carrying out the ion exchange are well known in the art.

A preferred Y zeolite for use as the starting zeolite in preparing the catalyst of the invention is one produced by first ammonium exchanging a Y zeolite to a sodium content between 0.6 and 5 weight percent, calculated as $Na_2O$, calcining the ammonium-exchanged zeolite at a temperature between 315°C (600° F.) and 900°C (1650° F.) in the presence of steam at a water vapor partial pressure of at least 1.4 kPa (0.2 p.s.i.a.) to reduce the unit cell size of the ammonium-exchanged zeolite to a value in the range between 2.440 and 2.464nm (24.40 and 24.64 Angstroms), and then ammonium exchanging the steam calcined zeolite to replace at least 25 percent of the residual sodium ions and obtain a zeolite product of less than about 1.0 weight percent sodium, preferably less than about 0.6 weight percent sodium, calculated as $Na_2O$. Such a Y zeolite is highly stable and maintains a high activity. The zeolite is described in detail in U.S. Patent No. 3,929,672. The same or a similar zeolite is sold by the Linde Division of Union Carbide Corporation (now UOP) as LZY-82 zeolite. Other preferred Y zeolites are prepared in the same manner as described above except that instead of exchanging the steam calcined zeolite with ammonium ions, the zeolite is leached with a solution of an organic chelating agent, such as EDTA, or an inorganic or organic acid. Preferably, the steam calcined zeolite is leached with a dilute solution of hydrochloric or sulfuric acid ranging in concentration between 0.01 N and 10 N. Zeolites prepared in the above-described manner are disclosed in U.K. Patent Application 2,114,594 published August 24, 1983.

A group of Y zeolites from which the starting zeolite for preparing the catalyst of the invention may be selected is comprised of dealuminated zeolites normally having an overall silica-to-alumina mole ratio above about 6.0, preferably between 6.1 and 16. The zeolites of this group are prepared by dealuminating a Y zeolite having an overall silica-to-alumina mole ratio below about 6.0 and are described in detail in U.S. Patent No. 4,503,023. A preferred member of this group is known as LZ-210, a zeolitic aluminosilicate molecular sieve available from the Linde Division of the Union Carbide Corporation (now UOP). LZ-210 zeolites and other zeolites of this group are conveniently prepared from a Y zeolite starting material in overall silica-to-alumina mole ratios between 6.0 and 20, although higher ratios are possible. Preferred LZ-210 zeolites have an overall silica-to-alumina mole ratio of 6.1 to 16. Typically, the unit cell size is at or below 2.465nm (24.65 Angstroms) and will normally range between 2.440 and 2.460nm (24.40 and 24.60 Angstroms). LZ-210 zeolites having an overall silica-to-alumina mole ratio below 20 generally have a sorptive capacity for water vapor of at least 20 weight percent based on the anhydrous weight of the zeolite at 25° C. and 4.6 millimeters mercury water vapor partial pressure. Normally, the oxygen sorptive capacity at 100 millimeters mercury and -183° C. will be at least 25 weight percent. In general, LZ-210 zeolites are prepared by treating Y zeolites with an aqueous solution of a fluorosilicate salt, preferably a solution of ammonium hexafluorosilicate.

In accordance with the invention, the Y zeolite or other crystalline aluminosilicate zeolite starting material is combined with a porous, inorganic refractory oxide component, or a precursor thereof, such as alumina, silica, titania, magnesia, zirconia, beryllia, silica-alumina, silica-magnesia, silica-titania, other such combinations and the like. Examples of precursors that may be used include peptized alumina, alumina gel, hydrated alumina, silica-alumina hydrogels and silica sols. Normally, the porous, inorganic refractory oxide component or precursor thereof is mixed or comulled with the aluminosilicate zeolite in amounts such that the final dry catalyst mixture will comprise (1) between 2 and 80 weight percent zeolite, preferably between 10 and 70 weight percent, and (2) between 30 and 98 weight percent porous, inorganic refractory oxide, preferably between 30 and 90 weight percent.

A preferred porous, inorganic refractory oxide component for use in preparing the catalyst is a heterogeneous dispersion of finely divided silica-alumina in an alumina matrix. Such a material is described in detail in U.S. Patent Nos. 4,097,365 and 4,419,271. One convenient method of preparing the dispersion is to comull an alumina hydrogel with a silica-alumina cogel in hydrous or dry form.

Alternately, the alumina hydrogel may be comulled with a "graft copolymer" of silica and alumina that has been prepared for example, by first impregnating a silica hydrogel with an alumina salt and then precipitating alumina gel in the pores of the silica hydrogel by contact with ammonium hydroxide. In the usual case, the cogel or copolymer is mulled with the alumina hydrogel such that the cogel or copolymer comprises 5 and 75 weight percent, preferably 20 to 65 weight percent of the mixture. The overall silica content of the resulting dispersion on a dry basis is normally between 1 and 75 weight percent, preferably between 5 and 45 weight percent. Typically, the silica-alumina is dispersed in a gamma alumina matrix.

The dispersion of silica-alumina in an alumina matrix or other porous, inorganic refractory oxide component is mulled, normally in the form of a powder, with the starting zeolite powder. If desired, a binder, such as Catapal alumina, may also be incorporated into the mulling mixture, as also may one or more active metal hydrogenation components such as ammonium heptamolybdate, nickel nitrate, ammonium metatungstate, cobalt nitrate and the like. After mulling, the mixture is extruded through a die having openings of a cross sectional size and shape desired in the final catalyst particles. For example, the die may have circular openings to produce cylindrical extrudates or openings in the shape of 3-leaf clovers so as to produce an extrudate material similar to that shown in Figures 8 and 8A of U.S. Patent No. 4,028,227. Among preferred shapes for the die openings are those that result in particles having surface-to-volume ratios greater than about 100 reciprocal units. If the die opening is not circular in shape, it is normally desirable that the opening be in a shape such that the surface-to-volume ratio of the extruded particles is greater than that of a cylinder. After extrusion, the extruded catalyst particles are broken into lengths of from 1.6 to 12.7mm (from 1/16 to 1/2 inch). The effective diameter of the extruded particles will normally range between 0.64 and 3.2mm (1/40 and 1/8 of an inch). The extruded particles will be quite large when compared to the size of the zeolite particles that are mulled to form the material that is extruded. Normally, the effective diameter of the extruded particles will range between 50 and 200 times greater than the diameter of the zeolite particles.

After the extruded catalyst particles are broken into the desired lengths, they are subjected to steam calcination by heating the extrudate particles in the presence of water vapor to at least about 500° C., usually between 600° C. and 870° C., and preferably in the range between 700° C. and 850° C. The steam calcination is normally carried out at a total pressure ranging between 52 kPa (7.5 p.s.i.a.) and 20.7 MPa(3000 p.s.i.a), preferably between 103 kPa (15 p.s.i.a.) and 10.3 MPa(1500 p.s.i.a), The water vapor partial pressure during the steam calcination will usually range from above 14, kPa (2.0 p.s.i.a.) to 1.03 MPa (150 p.s.i.a.), preferably from 34 kPa (5.0 p.s.i.a.) to 241 kPa (35 p.s.i.a.). In a preferred embodiment, the steam calcination step is performed in the presence of a gaseous atmosphere consisting essentially of water vapor and most preferably at about atmospheric pressure.

The steam calcination is generally carried out for a period of time correlated with the severity of the calcination conditions, especially the water vapor partial pressure and the calcination temperature, so as to convert the zeolite in the extrudates to an ultrahydrophobic zeolite. The desired ultrahydrophobic zeolites have a unit cell size between 2.420 and 2.445nm (24.20 and 24.45 Angstroms), preferably between 2.420 and 2.435nm (24.20 and 24.35 Angstroms), and a sorptive capacity for water vapor less than about 5 weight percent, preferably less than about 4 weight percent, of the zeolite at 25° C. and a $p/p°$ value of 0.10. The zeolites are the same or similar to the UHP-Y zeolites disclosed in U.S. Patent No. 4,401,556 and U.K. Patent No. 2,014,970 published on June 29, 1982. According to these references, a UHP-Y zeolite is defined as a zeolite having a silica-to-alumina mole ratio of from 4.5 to 35, the essential X-ray powder diffraction pattern of zeolite Y, an ion exchange capacity of not greater than 0.070, a unit cell size from 2.420 to 2.445nm (24.20 to 24.45 Angstroms), a surface area of at least 350 $meters^2/gram$ (B-E-T), a sorptive capacity for water vapor less than 5 weight percent at 25° C. and a $p/p°$ value of 0.10, and a Residual Butanol Test Value of not more than 0.4 weight percent. The Residual Butanol Test is a measure of the adsorptive selectivity of zeolite adsorbents for relatively nonpolar organic molecules under conditions in which there is active competition between water and less polar molecules for adsorption on the zeolite. The test procedure is described in detail in the above-identified patents.

Preferably the steam calcination is carried out under conditions such that the ultrahydrophobic zeolite formed during the calcination has a silica-to-alumina mole ratio between 4.5 and 9, the essential X-ray powder diffraction pattern of zeolite Y, an ion-exchange capacity of not greater than 0.070, and a Residual Butanol Test Value of not more than 0.4 weight percent. More preferably, the steam calcination is carried out under conditions such that LZ-10 zeolite is formed. LZ-10 zeolite is a modified y zeolite having a silica-to-alumina mole ratio between 4.5 and 6.0, a surface area between 500 and 700 $meters^2/gram$, a unit cell size between 2.420 and 2.435nm (24,20 and 24.35 Angstroms), and a sorptive capacity for water vapor less than about 5 percent by weight of the zeolite at 25° C. and a $p/p°$ value of 0.10.

The steam calcination treatment may be carried out by any number of procedures. In one method, the wet extrudates are merely heated in an enclosed vessel which prevents the escape of water vapor generated in situ. Alternatively, the extrudates may be heated in an autoclave equipped with a pressure relief valve such that super-atmospheric pressures of steam may be obtained therein. In yet another procedure, the extrudates may be introduced into a batch or continuous static bed calcination zone into which preheated steam or humidified air is also introduced. Most preferably, however, the extrudates are calcined in an inclined rotary kiln furnace by introducing the extrudates into the kiln at the entrance so that they pass downwardly at an incline in contact with steam that is introduced into the exit of the furnace, into the entrance of the furnace, or through a perforated pipe located in the center of the furnace and running the length of the furnace. Because the relatively small zeolite particles are incorporated into the relatively large extrudate particles, which because of their size are uniformly contacted with steam during the calcination step, the zeolite particles are easily and consistently converted to the desired ultrahydrophobic zeolite.

As mentioned previously, hydrogenation components may be mulled with the zeolite and the porous, inorganic refractory oxide component to form the extrudates which are subsequently subjected to steam calcination. Alternatively, the hydrogenation components may be added by impregnation after the steam calcination step. The hydrogenation component or components may be impregnated into the steam calcined extrudates from a liquid solution containing the desired hydrogenation component or components in dissolved form. In some cases it may be desirable to ion exchange the steam calcined extrudates with ammonium ions prior to adding the hydrogenation metal component or components. This may be done by slurrying the extrudates in a solution of an ammonium salt until the sodium content of the extrudates is decreased below about 0.2 weight percent, calculated as $Na_2O$. Hydrogenation components suitable for incorporation into the catalyst extrudates comprise metals selected from Group VIII or Group VIA of the Periodic Table of Elements. Preferred hydrogenation components comprise metals selected from the group consisting of platinum, palladium, cobalt, nickel, tungsten and molybdenum. In some cases, it may be desirable that the catalyst contain at least one Group VIII metal component and at least one Group VIA metal component. When this is the case, the preferred combination will normally be a nickel and/or cobalt component with a molybdenum and/or tungsten component.

If the hydrogenation component comprises a noble metal, it is generally desired that the dissolved hydrogenation component be present in the impregnation liquid in a proportion sufficient to ensure that the catalyst contains between 0.05 and 10 weight percent of the hydrogenation component, preferably between 0.10 weight percent and 3.0 weight percent, calculated as the metal. If the hydrogenation component comprises a non-noble metal, however, it is normally desired that the dissolved hydrogenation component be present in the impregnation liquid in a proportion sufficient to ensure that the catalyst contains between 1.0 and 40 weight percent of the hydrogenation component, preferably between 10 weight percent and 30 weight percent, calculated as the metal oxide. After the steamed extrudates have been impregnated with the solution containing the hydrogenation component or components, the particles are dried and calcined in air to produce the finished catalyst particles.

Hydrocarbon conversion catalysts prepared as described above are useful in the conversion of a wide variety of hydrocarbon feedstocks to midbarrel products boiling in the range between 150° C (300° F.) and 370° C (700° F.). If the catalyst does not contain a hydrogenation component, it may be utilized in the absence of added hydrogen as a catalyst for converting hydrocarbons to more valuable products by acid catalyzed reactions, such as catalytic cracking, isomerization of n-paraffins to isoparaffins, isomerization of alkyl aromatics, alkylation, and transalkylation of alkyl aromatics. If the catalyst contains one or more hydrogenation components, it may be used to convert feedstocks in the presence of added hydrogen to a midbarrel hydroconversion product boiling between 150° C. (300° F.) and 370° C. (700° F.). The feedstocks that may be subjected to hydrocarbon conversion by the method of the invention include mineral oils, and synthetic oils such as shale oil, oil derived from tar sands, coal liquids and the like. Examples of appropriate feedstocks for hydroconversion include straight run gas oils, vacuum gas oils, and catalytic cracker distillates. Preferred hydroconversion feedstocks include gas oils and other hydrocarbon fractions having at least 50 weight percent of their components boiling above 700° F.

The catalyst of the invention will usually be employed as a fixed bed of catalytic extrudates in a hydroconversion reactor into which hydrogen and the feedstock are introduced and passed in a downwardly direction. The reactor vessel is maintained at conditions so as to convert the feedstock into the desired product, which is normally a hydrocarbon product containing a substantial proportion of turbine fuel and diesel fuel components boiling in the range of between 150° C. (300° F.) and 370° C. (700° F.). In general, the temperature of the reaction vessel is maintained between 230° C. (450° F.) and 455° C. (850° F.), preferably between 315° C. (600° F.) and 425° C. (800° F.). The pressure will normally range between 5.2 MPa (750 p.s.i.g.) and 24 MPa (3500 p.s.i.g.), preferably between 7 MPa (1000 p.s.i.g.) and 20.7 MPa (3000 p.s.i.g.). The liquid hourly space velocity (LHSV) is typically between 0.3 and 5.0, preferably between 0.5 and 3.0. The ratio of hydrogen gas to feedstock utilized will usually range between 178 and 1780 $m^3/m^3$ (1000 and 10,000 standard cubic feet per barrel), preferably between 356 and 1424 $m^3/m^3$ (2000 and 8000 standard cubic feet per barrel) as measured at 16° C. (60° F.) and one atmosphere.

It will be apparent from the foregoing that the invention is primarily directed to a hydrocracking catalyst prepared in such a fashion that the selectivity of the catalyst for producing midbarrel products boiling between 150° C. (300° F.) and 370° C. (700° F.) from feedstocks containing a substantial proportion of material boiling above 370° C. (700° F.) remains constant from batch to batch. Moreover, the procedure for preparing the catalyst results in a less complicated and cheaper method of catalyst manufacturing.

## Claims

1. A process for making a hydrocarbon conversion catalyst which comprises:

    (a) extruding a mixture of a porous, inorganic refractory oxide component and a crystalline aluminosilicate zeolite selected from Y zeolites, modified Y zeolites, X zeolites and modified X zeolites and having cracking activity, to form extrudates; and

    (b) calcining said extrudates in the presence of steam at a water vapor partial pressure greater than about 14 kPa (2.0 p.s.i.a.) under conditions such that the unit cell size of said crystalline aluminosilicate zeolite is reduced to a value between 2.420 and 2.435nm (24.20 and 24.35 Angstroms).

2. A process as defined by claim 1, wherein said crystalline aluminosilicate zeolite used in step (a) has a silica-to-alumina mole ratio between 3 and 20.

3. A process as defined by claim 1 or 2, wherein the water vapor partial pressure of said steam and the temperature and time of said calcination are such that, if said aluminosilicate zeolite was calcined in steam alone without first being mixed and extruded with said refractory oxide component, the water vapour sorptive capacity of said aluminosilicate zeolite would be less than about 5 weight percent of said zeolite at $25°$ C and a $p/p°$ value of 0.10.

4. A process as defined by any one of claims 1 to 3, which further comprises impregnating said calcined extrudates with at least one metal hydrogenation component.

5. A process as defined by claim 4, wherein said calcined extrudates are impregnated with a Group VIII metal hydrogenation component and a Group VIA metal hydrogenation component.

6. A process as defined by claim 5, wherein said Group VIA metal hydrogenation component comprises a tungsten component or a molybdenum component and said Group VIII metal hydrogenation component comprises a nickel component or a cobalt component.

7. A process as defined by any preceding claim, wherein said porous, inorganic refractory oxide component comprises a dispersion of silica-alumina in gamma alumina.

8. A process as defined by any preceding claim, wherein said crystalline aluminosilicate zeolite used in step (a) comprises LZ-210 zeolite.

9. A process as defined by any one of claims 1 to 7, wherein said crystalline aluminosilicate zeolite used in step (a) comprises LZY-82 zeolite.

10. A process as defined by any one of claims 1 to 7, or claim 9, wherein said crystalline aluminosilicate zeolite used in step (a) is prepared by a process comprising the steps of (1) ammonium exchanging a sodium Y zeolite to a sodium content between 0.6 and 5 weight percent, calculated as $Na_2O$, (2) calcining the ammonium-exchanged zeolite at a temperature between $315°$ C $(600°$ F) and $900°$ C $(1650°$ F) in the presence of steam at a water vapor partial pressure of at least about 1.4 kPa (0.2 p.s.i.a.) to reduce the cell size of said ammoniumexchanged zeolite to a value in the range between 2.440 and 2.464nm (24.40 and 24.64 Angstroms), and (3) ammonium exchanging the steam calcined zeolite to reduce the sodium content of the zeolite below about 0.6 weight percent, calculated as $Na_2O$.

11. A process as defined by any one of claims 1 to 7, wherein said crystalline aluminosilicate Y zeolite used in step (a) is prepared by a process comprising (1) ammonium exchanging a sodium Y zeolite to a sodium content between 0.6 and 5 weight percent, calculated as $Na_2O$, (2) calcining the ammonium-exchanged zeolite at a temperature between $315°$ C $(600°$ F) and $900°$ C $(1650°$ F) in the presence of steam at a water vapor partial pressure of at least about 1.4 kPa (0.2 p.s.i.a.) to reduce the unit cell size of said ammonium-exchanged zeolite to a value in the range between 2.440 and 2.464nm (24.40 and 24.64 Angstroms), and (3) leaching the steam calcined zeolite with a solution of hydrochloric acid having a concentration between 0.1 N and 1.0 N.

12. A process as defined by any preceding claim, wherein said mixture is extruded through a die having a shape that results in extrudates having a surface-to-volume ratio greater than that of a cylinder.

13. A process as defined by claim 12, wherein said die has the shape of a 3-leaf clover.

14. A process as defined by any one of claims 1 to 3, or of claims 7 to 13, wherein said extrudates are formed by extruding a mixture of a porous, inorganic refractory oxide component, a crystalline aluminosilicate zeolite having cracking activity and at least one hydrogenation component.

15. A process as defined by any preceding claim, wherein said water vapor partial pressure is above about 34.5 kPa (5.0 p.s.i.a.).

16. A process as defined by any preceding claim, wherein said water vapor partial pressure is less than about 241 kPa (35 p.s.i.a.).

17. A process as defined by any preceding claim, which further comprises ion exchanging said steam calcined extrudates with ammonium ions to further reduce the sodium content of said extrudates.

18. A process as defined by any one of claims 1 to 11, wherein said mixture is extruded in the shape of cylinders.

19. A hydrocarbon conversion process which comprises contacting a hydrocarbon feedstock with a hydrocarbon conversion catalyst under hydrocarbon conversion conditions, wherein said catalyst is prepared by the process of any one of claims 1 to 18.

20. A process as defined by claim 19, wherein said hydrocarbon conversion process is selected from catalytic cracking, isomerization of n-paraffins to isoparaffins, isomerization of alkyl aromatics, alkylation, and transalkylation of alkyl aromatics.

21. A hydroconversion process which comprises contacting a hydroconversion feedstock under hydroconversion reaction conditions with a hydroconversion catalyst in the presence of added hydrogen to convert said feedstock into hydroconversion reaction products, wherein said catalyst is prepared by the process of any one of claims 1 to 18.

22. A hydroconversion process as defined by claim 21, wherein said hydroconversion process comprises a hydrocracking process for selectively producing middle distillates.

**Revendications**

1. Un procédé de préparation d'un catalyseur de conversion d'hydrocarbures, qui consiste:
   a. à extruder un mélange d'un composant oxyde réfractaire minéral poreux et d'une zéolite de type aluminosilicate cristallin choisie parmi les zéolites Y, les zéolites Y modifiées, les zéolites X et les zéolites X modifiées et présentant une activité de craquage, pour former des extrudats: et
   b. à calciner ces extrudats en présence de vapeur, sous une pression partielle de vapeur d'eau supérieure à environ 14 kPa (2,0 psia) dans des conditions telles que la taille des cellules unitaires de ladite zéolite du type aluminosilicate cristallin soit réduite à une valeur comprise entre 2,420 et 2,435 nm (entre 24,20 et 24,35 angströms).

2. Un procédé selon la revendication 1, dans lequel ladite zéolite de type aluminosilicate cristallin utilisée dans l'étape (a) a un rapport molaire silice/alumine compris entre 3 et 20.

3. Un procédé selon les revendications 1 ou 2, dans lequel la pression partielle de vapeur d'eau de ladite vapeur et la température et la durée de ladite calcination sont telles que, si ladite zéolite du type aluminosilicate était calcinée dans de la vapeur seule, sans avoir été au préalable mélangée et extrudée avec ledit composant oxyde réfractaire, le pouvoir d'adsorption de la vapeur d'eau de la zéolite du type aluminosilicate serait inférieur à environ

5% en poids par rapport à ladite zéolite, à 25° C et pour un coefficient p/p° de 0,10.

4. Un procédé selon l'une quelconque des revendications 1 à 3, qui consiste en outre à imprégner lesdits extrudats calcinés avec au moins un composant d'hydrogénation métallique.

5. Un procédé selon la revendication 4, dans lequel lesdits extrudats calcinés sont imprégnés d'un composant d'hydrogénation à base d'un métal du Groupe VIII et d'un composant d'hydrogénation à base d'un métal du Groupe VIA.

6. Un procédé selon la revendication 5, dans lequel ledit composant d'hydrogénation à base d'un métal du Groupe VIA comprend un composant à base de tungstène ou un composant à base de molybdène, et ledit composant d'hydrogénation à base d'un métal du Groupe VIII comprend un composant à base de nickel ou un composant à base de cobalt.

7. Un procédé selon l'une quelconque des revendications précédentes, dans lequel ledit composant oxyde réfractaire minéral poreux comprend une dispersion de silice/alumine dans de l'alumine gamma.

8. Un procédé selon l'une quelconque des revendications précédentes, dans lequel ladite zéolite du type aluminosilicate cristallin utilisée dans l'étape (a) est une zéolite LZ-210.

9. Un procédé selon l'une quelconque des revendications 1 à 7, dans lequel ladite zéolite du type aluminosilicate cristallin utilisée dans l'étape (a) est une zéolite LZY-82.

10. Un procédé selon l'une quelconque des revendications 1 à 7 ou selon la revendication 9, dans laquelle ladite zéolite du type aluminosilicate cristallin utilisée dans l'étape (a) est préparée par un procédé comprenant les étapes consistant:
   1. à faire subir à une zéolite Y au sodium un échange par des ions ammoniums, jusqu'à une teneur en sodium comprise entre 0,6 et 5% en poids, calculée en $Na_2O$;
   2. à calciner la zéolite, dont les ions sodiums ont été remplacés par des ions ammoniums, à une température comprise entre 315° C (600° F) et 900° C (1650° F) en présence de vapeur, sous une pression partielle de vapeur d'eau d'au moins environ 1,4 kPa (0,2 psia) pour réduire la taille des cellules de ladite zéolite ayant subi un échange par des ions ammoniums à une valeur comprise entre 2,440 et 2,464 nm (entre 24,40 et 24,64 angströms); et

3. à faire subir un échange, par ions ammoniums, à la zéolite calcinée à la vapeur, pour réduire la teneur en sodium de la zéolite en-dessous d'environ 0,6% en poids, calculée en Na$_2$O.

11. Un procédé selon l'une quelconque des revendications 1 à 7, dans lequel ladite zéolite Y du type aluminosilicate cristallin utilisée dans l'étape (a) est préparée par un procédé consistant:

1. à faire subir à une zéolite Y au sodium un échange d'ions pour remplacer les ions sodiums par des ions ammoniums, jusqu'à une teneur en sodium comprise entre 0,6 et 5% en poids, calculée en Na$_2$O;

2. à calciner la zéolite ainsi échangée par des ions ammoniums à une température comprise entre 315°C (600°F) et 900°C (1650°F) en présence de vapeur, sous une pression partielle de vapeur d'eau d'au moins environ 1,4 kPa (0,2 psia) pour réduire la taille des cellules unitaires de ladite zéolite ayant subi l'échange par des ions ammoniums à une valeur comprise entre 2,440 et 2,464 nm (entre 24,40 et 24,64 angströms); et

3. à lixivier la zéolite calcinée à la vapeur avec une solution d'acide chlorhydrique ayant une concentration comprise entre 0,1 et 1,0N.

12. Un procédé selon l'une quelconque des revendications précédentes, dans lequel ledit mélange est extrudé à travers une filière ayant une forme donnant des extrudats ayant un rapport surface/volume supérieur à celui d'un cylindre.

13. Procédé selon la revendication 12, dans lequel ladite filière à la forme d'un trèfle à trois feuilles.

14. Un procédé selon l'une quelconque des revendications 1 à 3 ou selon les revendications 7 à 13, dans lequel lesdits extrudats sont formés par extrusion d'un mélange d'un composant oxyde réfractaire minéral poreux, d'une zéolite du type aluminosilicate cristallin ayant une activité de craquage et d'au moins un composant d'hydrogénation.

15. Un procédé selon l'une quelconque des revendications précédentes, dans lequel ladite pression partielle de vapeur d'eau est supérieure à environ 34,5 kPa (5,0 psia).

16. Un procédé selon l'une quelconque des revendications précédentes, dans lequel ladite pression partielle de vapeur d'eau est inférieure à environ 241 kPa (35 psia).

17. Un procédé selon l'une quelconque des revendications précédentes, qui consiste en outre à faire subir un échange d'ions auxdits extrudats calcinés à la vapeur à l'aide d'ions ammoniums pour réduire encore plus la teneur en sodium de ces extrudats.

18. Un procédé selon l'une quelconque des revendications 1 à 11, dans lequel ledit mélange est extrudé pour prendre la forme de cylindres.

19. Un procédé de conversion d'hydrocarbures qui consiste à mettre en contact une charge hydrocarbonée avec un catalyseur de conversion d'hydrocarbures dans les conditions d'une conversion d'hydrocarbures, dans lequel ledit catalyseur est préparé par le procédé selon l'une quelconque des revendications 1 à 18.

20. Un procédé selon la revendication 19, dans lequel ledit procédé de conversion d'hydrocarbures est choisi entre le craquage catalytique, l'isomérisation de n-paraffines en isoparaffines, l'isomérisation d'alkyles aromatiques, l'alkylation, et la transalkylation d'alkyles aromatiques.

21. Un procédé d'hydroconversion, qui consiste à mettre en contact une charge d'hydroconversion, dans les conditions d'une réaction d'hydroconversion, avec un catalyseur d'hydroconversion en présence d'hydrogène ajouté pour convertir la charge en des produits de réaction d'hydroconversion, dans lequel ledit catalyseur est préparé par le procédé selon l'une quelconque des revendications 1 à 18.

22. Un procédé d'hydroconversion selon la revendication 21, dans lequel ledit procédé d'hydroconversion comprend un procédé d'hydrocraquage destiné à produire sélectivement des distillats moyens.

**Ansprüche**

1. Verfahren zur Herstellung eines Katalysators zur Umwandlung von Kohlenwasserstoffverbindungen, das folgendes umfaßt:

(a) Extrudieren eines Gemisches aus einer porösen, anorganischen refraktorischen Oxidkomponente und einem kristallinen Aluminosilikat-Zeolith, ausgewählt aus Y-Zeolithen, modifizierten Y-Zeolithen, X-Zeolithen und modifizierten X-Zeolithen, mit Crack-Aktivität, um Extrudate zu bilden; und (b) Kalzinieren besagter Extrudate in Gegenwart von Dampf bei einer Wasserdampf-Partialdruck, der größer ist als etwa 14 kPa (2,0 p.s.i.a.), unter solchen Bedingungen, daß die Einheitszellgröße besagten kristallinen Aluminosilikat-Zeoliths auf einen Wert zwischen 2,420 und 2,435 nm (24,20 und 24,35 Angstrom) verringert wird.

2. Verfahren nach Anspruch 1, dadurch gekennzeichnet, daß besagtes kristallines Aluminosilikat-Zeolith, das in Schritt (a) verwendet wird, ein Molverhältnis von Siliziumdioxid zu Aluminiumoxid zwischen 3 und 20 besitzt.

3. Verfahren nach Anspruch 1 oder 2, dadurch gekennzeichnet, daß der Wasserdampf-Partialdruck besagten Dampfes und die Temperatur und Dauer besagter Kalzinierung derart sind, daß, wenn besagtes Aluminosilikat-Zeolith allein ohne vorheriges Vermischen und Extrudieren mit besagter refraktorischer Oxidkomponente in Dampf kalziniert würde, die Wasserdampf-Sorbierfähigkeit besagten Aluminosilikat-Zeoliths geringer wäre als etwa 5 Gew.-% besagten Zeoliths bei 25°C und einem p/p°-Wert von 0,10.

4. Verfahren nach einem der Ansprüche 1 bis 3, das außerdem das Imprägnieren besagter kalzinierter Extrudate mit wenigstens einer Metall-Hydrierungskomponente umfaßt.

5. Verfahren nach Anspruch 4, dadurch gekennzeichnet, daß besagte kalzinierte Extrudate mit einer Hydrierrungskomponente mit einem Metall der Gruppe VIII und einer Hydrierungskomponente mit einem Metall der Gruppe VIA imprägniert werden.

6. Verfahren nach Anspruch 5, dadurch gekennzeichnet, daß besagte Hydrierungskomponente mit einem Metall der Gruppe VIA eine Wolfram-Komponente oder eine Molybdän-Komponente umfaßt und daß besagte Hydrierungskomponente mit einem Metall der Gruppe VIII eine Nickel-Komponente oder eine Kobalt-Komponente umfaßt.

7. Verfahren nach einem der vorangehenden Ansprüche, dadurch gekennzeichnet, daß besagte poröse, anorganische refraktorische Oxidkomponente eine Dispersion von Siliziumdioxid-Aluminiumoxid in Gamma-Aluminiumoxid umfaßt.

8. Verfahren nach einem der vorangehenden Ansprüche, dadurch gekennzeichnet, daß besagtes kristallines Aluminosilikat-Zeolith, das in Schritt (a) verwendet wird, LZ-210-Zeolith umfaßt.

9. Verfahren nach einem der Ansprüche 1 bis 7, dadurch gekennzeichnet, daß besagtes kristallines Aluminosilikat-Zeolith, das in Schritt (a) verwendet wird, LZY-82-Zeolith umfaßt.

10. Verfahren nach einem der Ansprüche 1 bis 7 oder nach Anspruch 9, dadurch gekennzeichnet, daß besagtes kristallines Aluminosilikat-Zeolith, das in Schritt (a) verwendet wird, mit einem Verfahren hergestellt ist, das folgende Schritte umfaßt: (1) Ammoniumaustausch eines Natrium-Y-Zeoliths bis zu einem Natriumgehalt zwischen 0,6 und 5 Gew.-%, berechnet als $Na_2O$, (2) Kalzinieren des ammoniumausgetauschten Zeoliths bei einer Temperatur zwischen 315°C (600°F) und 900°C (1650°F) in Gegenwart von Dampf bei einem Wasserdampf-Partialdruck von wenigstens etwa 1,4 kPa (0,2 p.s.i.a.), um die Zellgröße besagten ammoniumausgetauschten Zeoliths auf einen Wert im Bereich zwischen 2,440 und 2,464 nm (24,40 und 24,64 Angstrom) zu verringern, und (3) Ammoniumaustausch des dampfkalzinierten Zeoliths, um den Natriumgehalt des Zeoliths unter etwa 0,6 Gew.-%, berechnet als $Na_2O$, abzusenken.

11. Verfahren nach einem der Ansprüche 1 bis 7, dadurch gekennzeichnet, daß besagtes kristallines Aluminosilikat-Y-Zeolith, das in Schritt (a) verwendet wird, in einem Verfahren hergestellt ist, das folgendes umfaßt: (1) Ammoniumaustausch eines Natrium-Y-Zeoliths bis zu einem Natriumgehalt zwischen 0,6 und 5 Gew.-%, berechnet als $Na_2O$, (2) Kalzinieren des ammoniumausgetauschten Zeoliths bei einer Temperatur zwischen 315°C (600°F) und 900°C (1650°F) in Gegenwart von Dampf bei einem Wasserdampf-Partialdruck von wenigstens etwa 1,4 kPa (0,2 p.s.i.a.), um die Einheitszellgröße besagten ammoniumausgetauschten Zeoliths auf einen Wert im Bereich zwischen 2,440 und 2,464 nm (24,40 und 24,64 Angstrom) zu verringern, und (3) Auslaugen des dampfkalzinierten Zeoliths mit einer Salzsäurelösung mit einer Konzentration zwischen 0,1 N und 1,0 N.

12. Verfahren nach einem der vorangehenden Ansprüche, dadurch gekennzeichnet, daß besagtes Gemisch durch ein Mundstück extrudiert wird, das eine Form besitzt, die zu Extrudaten führt, die ein Oberfläche-zu-Volumen-Verhältnis besitzen, das größer ist als das eines Zylinders.

13. Verfahren nach Anspruch 12, dadurch gekennzeichnet, daß besagtes Mundstück die Form eines dreiblättrigen Kleeblattes besitzt.

14. Verfahren nach einem der Ansprüche 1 bis 3 oder nach einem der Ansprüche 7 bis 13, dadurch gekennzeichnet, daß besagte Extrudate zur extrudieren eines Gemisches einer porösen, anorganischen refraktorischen Oxidkomponente, eines kristallinen Aluminosilikat-Zeoliths mit Crack-Aktivität und wenigstens einer Hydrierungskomponente gebildet wird.

15. Verfahren nach einem der vorangehenden Ansprüche, dadurch gekennzeichnet, daß besagter Wasserdampf-Partialdruck über etwa 34,5 kPa (5`0 p.s.i.a.) liegt.

16. Verfahren nach einem der vorangehenden Ansprüche, dadurch gekennzeichnet, daß besagter Wasserdampf-Partialdruck niedriger als etwa 241 kPa (35 p.s.i.a.) ist.

17. Verfahren nach einem der vorangehenden Ansprüche das außerdem den Ionenaustausch besagter dampfkalzinierter Extrudate mit Ammonium-Ionen umfaßt, um den Natriumgehalt besagter Extrudate weiter abzusenken.

18. Verfahren nach einem der Ansprüche 1 bis 11, dadurch gekennzeichnet, daß besagtes Gemisch in Form von Zylindern extrudiert wird.

19. Verfahren zur Umwandlung von Kohlenwasserstoffverbindungen, welches das In-Kontakt-Bringen einer Kohlenwasserstoffcharge mit einem Katalysator zur Umwandlung von Kohlenwasserstoffverbindungen unter Bedingungen zur Umwandlung von Kohlenwasserstoffbedingungen umfaßt, wobei besagter Katalysator mit dem Verfahren nach einem der Ansprüche 1 bis 18 hergestellt ist.

20. Verfahren nach Anspruch 19, dadurch gekennzeichnet, daß besagtes Verfahren zur Umwandlung von Kohlenwasserstoffverbindungen ausgewählt ist aus katalytischer Crackung, Isomerisierung von n-Paraffinen zu iso-Paraffinen, Isomerisierung von Alkylaromaten, Alkylierung und Transalkylierung von Alkylaromaten.

21. Verfahren zur Hydroumwandlung, welches das In-Kontakt-Bringen einer Hydroumwandlungscharge unter Hydroumwandlungsreaktionsbedingungen mit einem Hydroumwandlungskatalysator in Gegenwart von zugesetztem Wasserstoff umfaßt, um besagte Charge in Hydroumwandlungsreaktionsprodukte umzuwandeln, wobei besagter Katalysator nach dem Verfahren nach einem der Ansprüche 1 bis 18 hergestellt ist.

22. Verfahren zur Hydroumwandlung nach Anspruch 21, dadurch gekennzeichnet, daß besagtes Verfahren zur Hydroumwandlung ein Hydrocrackverfahren zur selektiven Herstellung von Mittelölen umfaßt.